# EUROPÄISCHE PATENTSCHRIFT

(11) **EP 0 704 409 B1**
(45) Veröffentlichungstag und Bekanntmachung des Hinweises auf die Patenterteilung: **31.03.1999**
(21) Anmeldenummer: 95113944.3
(22) Anmeldetag: 06.09.1995
(51) Int. Cl.: C04B 18/04, C04B 18/02, C04B 20/12, B09B 3/00

(54) **Verfahren zur Verarbeitung von Abfall zu Festkörpern**
Method for processing waste into solid bodies
Procédé pour transformer des déchets en corps solides

(30) Priorität: 27.09.1994 DE 4434433
(43) Veröffentlichungstag der Anmeldung: 03.04.1996
(73) Patentinhaber: Ratjen, Werner, D-24220 Flintbek (DE)
(72) Erfinder: Ratjen, Werner, D-24220 Flintbek (DE)
(74) Vertreter: Wilcken, Thomas, Dipl.-Ing.

(56) Entgegenhaltungen:
- EP-A- 0 395 165
- DE-A- 3 630 107
- DE-A- 3 832 771

## Beschreibung

Die Erfindung betrifft ein Verfahren zur Verarbeitung von Abfall zu Festkörpern, bei dem der Abfall in einem ersten Schritt zerkleinert und gemischt wird und die Abfallmischung in weiteren Schritten unter Zusatz von Bindemitteln und Wasser zur Herstellung der Festkörper verarbeitet wird.

Die Beseitigung und Entsorgung von Abfall bzw. Müll, der in der Industrie und in Haushalten anfällt, bereiten große Probleme, zumal meist nur ein geringer Teil solcher Abfälle durch Recycling wiederverwertet werden kann und der andere Teil auf Deponien gelagert werden muß. Zu beachten ist außerdem, daß Abfälle häufig auch Gifte und nicht umweltverträgliche Stoffe enthalten und dann meist gesondert deponiert werden müssen.

Zur Vermeidung des hiermit verbundenen Aufwandes ist es deshalb günstiger, die Abfallstoffe direkt weiter zur Herstellung anderer Produkte zu verarbeiten, die in bestimmten Bereichen beispielsweise als Baumaterial Verwendung finden können.

Bei einem bekannten Verfahren (DE-A-31 50 419) zur Aufbereitung von insbesondere Gifte und sonstige Schadstoffe enthaltenden Abfällen wird so vorgegangen, daß die Abfälle für ein anschließendes Recycling mit einem Bindemittel, wie etwa Zement oder Kalk, versetzt und gemischt werden und die so entstandene Mischung in einer rotierenden Trommel pelletiert wird. Bei den mit diesem Verfahren hergestellten Pellets sind die Abfallstoffe allerdings nicht eingekapselt, so daß die Pellets, falls der Abfall Schadstoffe enthalten sollte, in dieser Form nicht ohne weiteres zu Bauzwecken und dergleichen verwendbar sind. Deshalb können solche Pellets nur abgelagert werden, indem sie beispielsweise in einer Zementschlämme aufgeschlämmt und zum vorgesehenen Lagerort transportiert werden.

Es ist auch bekannt (DE-A-38 32 771), Abfälle auf die Weise zu weiterverwendbaren Festkörpern zu verarbeiten, daß zunächst eine homogene Mischung aus dem zerkleinerten Abfall hergestellt und diese mit einem Bindemittel versetzte Mischung in die Form von Preßlingen gebracht wird. Anschließend werden die Preßlinge zum Trocknen und Aushärten erhitzt und zermahlen, so daß man einen feinteiligen Werkstoff erhält, der schließlich einer Agglomerationsbehandlung unter Zusatz von Kalk, Gips oder Zement und Wasser unterworfen wird.

Die hierbei entstehenden kugelförmigen Festkörper werden zwar möglicherweise außen wegen des dort höheren Bindemittelanteiles härter sein als innen, die äußere Schicht bzw. Hülle wird aber keine dichte Sperre gegen das Austreten von Schadstoffen bilden können, abgesehen davon, daß es bei diesem bekannten Verfahren nicht zu vermeiden sein wird, daß sich Schadstoffe sogar unmittelbar außen auf der Hülle befinden werden. Außerdem ist noch festzustellen, daß die Festkörperkugeln, falls nicht besonders hohe Anteile von Zement oder anderen Bindemitteln zur Anwendung kommen, nicht besonders stabil sind, also schon bei Einwirkung geringer mechanischer Kräfte zu Bruch gehen werden und deshalb nicht als Baumaterial verwendbar sind. Zu besseren Ergebnissen könnte man insofern gegebenenfalls durch Zusätze von Wasserglas (DE-A-35 06 132) oder von Zweikomponenten-Bindemitteln (DE-A-38 39 986) kommen.

Es soll deshalb ein Verfahren zur Verarbeitung von Abfall zu mechanisch hoch belastbaren Festkörpern vorgeschlagen werden, bei dem die zerkleinerten Abfallstoffe sicher und zur Umgebung hin bleibend dicht eingekapselt sind.

Diese Aufgabe wird mit einem Verfahren gemäß dem Patentanspruch 1 gelöst. Weitere vorteilhafte Verfahrensmerkmale sind in den Unteransprüchen angegeben.

Bei dem zu verarbeitenden Abfall kann es sich im Prinzip um jeden in der Industrie und in Haushalten anfallenden Abfall handeln, falls es sich nicht um Sondermüll handelt, der aufgrund gesetzlicher Bestimmungen gegebenenfalls gesondert entsorgt werden muß. Jedenfalls wird der Abfall neben organischen Bestandteilen auch solche aus Pappe, Papier, Kunststoff, Glas und Metall enthalten.

Der unsortierte Abfall wird beispielsweise über ein Förderband einer ersten Zerkleinerungsanlage zugeführt, wobei Metallteile mit Abmessungen von mehr als 2 mm entfernt und auf andere Weise gesondert verarbeitet werden sollten. Große Abfallanteile werden zunächst in Stücke mit maximalen Abmessungen von etwa 100 mm grob zerkleinert, und anschließend wird der Abfall in einer weiteren Anlage in Stücke mit maximalen Abmessungen von etwa 10 mm weiter zerkleinert. Dann kommt der so zerkleinerte Abfall in eine Granulatanlage, wo er in Teile mit Abmessungen in der Größenordnung von 1 bis 2 oder 3 mm granuliert wird. Anschließend wird der granulierte Abfall in einer Mischanlage intensiv gemischt, womit der erste Verfahrensschritt beendet ist.

Dann wird in einem zweiten Schritt eine sogenannte Kernmasse hergestellt, indem die homogene Abfallmischung mit Wasser und Zement versetzt wird und die dabei entstehende Masse gut durchgeknetet wird. Diese wird nach einer vorgegebenen Zeitspanne von ca. 10 Minuten, in welcher der Zement abzubinden begonnen hat, durch Pressen in die Form von Kernsträngen gebracht, wobei bei diesem dritten Verfahrensschritt gleichzeitig die Temperatur der Kernmasse erhöht wird, um diese zu desinfizieren und/oder zu sterilisieren. Hierbei wird zum Desinfizieren eine Temperatur von 100°C ausreichen, während die Temperatur für eine Sterilisierung der Kernmasse höher und über 140°C liegen muß.

Zur Herstellung der Kernstränge wird die Kernmasse durch eine gelochte Scheibe gepreßt, wobei der Preßdruck und die Abmessungen der Scheibenlöcher so gewählt sind, daß die die Scheibe verlassenden Kernstränge eine Temperatur von wenigstens 100°C haben. Diese relativ hohe Temperatur trägt im übrigen auch dazu bei, daß der Zement in den Kernsträngen relativ schnell abbindet.

Die abgekühlten und zumindest weitgehend abgebundenen Kernstränge, die einen Durchmesser von etwa 2 mm haben, kommen dann zur Durchführung eines vierten Verfahrensschrittes in eine rotierend angetriebene Trommel nach Art eines Dragierkessels, in der sie in Kernstrangstücke von ca. 2 bis 3 mm Länge gebrochen werden.

Die abgebundenen Kernstrangstücke verbleiben in der rotierenden Trommel, in die Wasserglas gegeben wird, mit dem die Kernstrangstücke unter fortlaufender Bewegung in der Trommel dragiert und eingekapselt werden. Dieser fünfte Verfahrensschritt wird damit abgeschlossen, daß mit abgebundenem Wasserglas umhüllte Kernstrangstücke außerdem noch mit einer in die Trommel gegebenen Zement-Wasser-Mischung umhüllt werden, wobei Zement durch Aufsieben und Wasser jeweils nach einander in die Trommel gegeben werden. Nach Abbinden des Zementes sind Kernprodukte mit jeweils zwei die Kernstrangstücke dicht einschließenden Schalen aus Wasserglas bzw. Zement entstanden.

Da diese Kernprodukte im allgemeinen noch nicht ausreichend stabil und druckfest sind, werden sie in einem sechsten Verfahrensschritt in der drehenden Trommel verbleibend durch Auftragen von Wasserglas eingekapselt und anschließend nach Abbinden des Wasserglases mindestens einmal mit einer Mischung aus Sand mit einer Korngröße bis zu 0,2 mm, Zement, Wasser und gegebenenfalls Zementhärter zur Bildung von Pellets beschichtet.

Diese Pellets mit Abmessungen in der Größenordnung von 2 bis 5 mm werden zum Aushärten in einem letzten Verfahrensschritt während einer vorgegebenen Zeitspanne von etwa drei Tagen in Schichten von ca. 100 mm Höhe gelagert, und zwar zur Vermeidung von Feuchtigkeitsverlusten vorzugsweise unter Luftabschluß. Dann werden die Pellets verpackt. Sie härten dann in der Verpackung weiter aus und sind schließlich als Festkörper verarbeitungsfähig.

Aufgrund der Beschichtungen bzw. Hüllen der Festkörper ist gewährleistet, daß die in ihrem Kernbereich befindlichen Abfallteile nicht mit der Umgebung in Kontakt kommen können, wobei vor allem die Wasserglashüllen auch dafür sorgen, daß weder Schadstoffe noch Gase aus den Festkörpern treten können. Da schon die umhüllten Kernstrangstücke abgebundenen Zement enthalten und dementsprechend fest sind, ergibt sich ein insgesamt hochbelastbarer und bruchsicherer Festkörper, der vergleichbar mit Kies von entsprechender Körnung vielseitig eingesetzt werden kann, wie etwa beim Haus- und Straßenbau.

Besonders vorteilhaft ist es, daß der vierte, fünfte und sechste Verfahrensschritt unter Verwendung einer einzelnen die zu behandelnden Produkte aufnehmenden und drehend angetriebenen Trommel durchgeführt werden können, so daß ein sonst aufwendiges Umfüllen oder Verbringen der Zwischenprodukte in andere Einrichtungen der Herstellungsanlage entfallen.

Praktische Versuche haben gezeigt, daß man zu besonders günstigen Ergebnissen kommt, wenn für die Anteile der im zweiten Schritt herzustellenden Kernmasse folgende Größenordnungen in Gewichtsprozenten gewählt werden, nämlich 40 bis 80 % Müllmischung, 30 bis 40 % Wasser und 10 bis 20 % Zement, und wenn für die Anteile der im fünften Verfahrensschritt herzustellenden Kernprodukte folgende Größenordnungen in Gewichtsprozenten gewählt werden, nämlich 75 bis 85 % Kernstrangstücke, 2 bis 4 % Wasser, 6 bis 8 % Wasserglas und 7 bis 9 % Zement.

Schließlich sollten für die Anteile der Pellets, die im sechsten Schritt hergestellt werden, folgende Größenordnungen, ebenfalls in Gewichtsprozenten angegeben, gewählt werden, nämlich 60 bis 70 % Kernprodukte, 5 bis 7 % Wasserglas, 4 bis 6 % Wasser, 4 bis 6 % Sand, 17 bis 21 % Zement und 0,5 bis 1,5 % Zementhärter.

## Patentansprüche

1. Verfahren zur Verarbeitung von Abfall zu Festkörpern, bei dem der Abfall in einem ersten Schritt zerkleinert und gemischt wird und diese Abfallmischung in weiteren Schritten unter Zusatz von Bindemitteln und Wasser zur Herstellung der Festkörper verarbeitet wird, dadurch gekennzeichnet,
daß in einem zweiten Schritt die Abfallmischung mit Wasser und Zement versetzt und zu einer breiigen Kernmasse verarbeitet wird,
daß die Kernmasse nach einer vorgegebenen Zeitspanne in einem dritten Schritt durch Pressen in die Form von Kernsträngen gebracht und dabei die Temperatur der Kernmasse erhöht wird,
daß die abgekühlten und abgebundenen Kernstränge in einem vierten Schritt in Kernstrangstücke gebrochen werden,
daß in einem fünften Schritt die Kernstrangsstücke zunächst mit Wasserglas und anschließend nach Abbinden des Wasserglases mit einer Zement-Wasser-Mischung eingekapselt werden und nach Abbinden des Zementes Kernprodukte bilden,
daß die Kernprodukte in einem sechsten Schritt zunächst durch Auftragen von Wasserglas eingekapselt werden und anschließend nach Abbinden des Wasserglases mindestens einmal mit einer Mischung aus Sand, Zement und Wasser zur Bildung von Pellets beschichtet werden und
daß die Pellets zum Aushärten in einem letzten Schritt während einer vorgegebenen Zeitspanne gelagert werden und dann die erwähnten Festkörper bilden.

2. Verfahren nach Anspruch 1, dadurch gekennzeichnet, daß der im sechsten Schritt zur Anwendung kommenden Mischung Zementhärter zugesetzt wird.

3. Verfahren nach einem der Ansprüche 1 und 2, dadurch gekennzeichnet, daß im letzten Schritt die Pellets unter Luftabschluß gelagert werden.

4. Verfahren nach einem der Ansprüche 1 bis 3, dadurch gekennzeichnet, daß der Abfall beim ersten Verfahrensschritt in Zerkleinerungsanlagen zunächst grob zerkleinert und danach in einer Granulatanlage zu Stücken mit maximalen Abmessungen von 1 bis 3 mm weiter fein zerkleinert wird.

5. Verfahren nach einem der Ansprüche 1 bis 4, dadurch gekennzeichnet, daß die Kernmasse zur Herstellung der Kernstränge durch eine gelochte Scheibe gepreßt wird, wobei der Preßdruck und die Abmessungen der Scheibenlöcher so gewählt sind, daß die die Scheibe verlassenden Kernstränge eine Temperatur von mindestens 100°C haben.

6. Verfahren nach einem der Ansprüche 1 bis 5, dadurch gekennzeichnet, daß der vierte, fünfte und sechste Verfahrensschritt unter Verwendung einer die zu behandelnden Produkte aufnehmenden und rotierend angetriebenen Trommel durchgeführt werden.

7. Verfahren nach einem der Ansprüche 1 bis 6, dadurch gekennzeichnet, daß für die Anteile der im zweiten Schritt herzustellenden Kernmasse folgende Größenordnungen in Gewichtsprozenten gewählt werden, nämlich 40 bis 80 % Müllmischung, 30 bis 40 % Wasser und 10 bis 20 % Zement.

8. Verfahren nach einem der Ansprüche 1 bis 7, dadurch gekennzeichnet, daß für die Anteile der im fünften Schritt herzustellenden Kernprodukte folgende Größenordnungen in Gewichtsprozenten gewählt werden, nämlich 75 bis 85 % Kernstrangstücke, 2 bis 4 % Wasser, 6 bis 8 % Wasserglas und 7 bis 9 % Zement.

9. Verfahren nach einem der Ansprüche 1 bis 8, dadurch gekennzeichnet, daß für die Anteile der im sechsten Schritt herzustellenden Pellets folgende Größenordnungen in Gewichtsprozenten gewählt werden, nämlich 60 bis 70 % Kernprodukte, 5 bis 7 % Wasserglas, 4 bis 6 % Wasser, 4 bis 6 % Sand, 17 bis 21 % Zement und 0,5 bis 1,5 % Zementhärter.

## Claims

1. A method for the processing of waste into solid bodies, in which in a first step the waste is comminuted and mixed and this waste mixture is processed in further steps with the addition of binding agents and water for the production of the solid bodies, characterized in that
in a second step the waste mixture is mixed with water and cement and is processed into a pulpy core matter,
that the core matter, after a given timespan, is brought into the form of core strands by pressing in a third step, and in so doing the temperature of the core matter is increased,
that the cooled and set core strands are broken into core strand pieces in a fourth step,
that in a fifth step the core strand pieces are firstly encased with water glass and then after the setting of the water glass, they are encased with a cement/water mixture, and after the setting of the cement they form core products,
that in a sixth step the core products are firstly encased by the application of water glass and then after the setting of the water glass they are coated at least once with a mixture of sand, cement and water to form pellets and
that in a final step the pellets are stored for a given timespan for hardening and then form the said solid bodies.

2. The method according to Claim 1, characterised in that cement hardener is added to the mixture which is used in the sixth step.

3. The method according to any of Claims 1 and 2, characterised in that in the final step the pellets are stored with the exclusion of air.

4. The method according to any of Claims 1 to 3, characterised in that in the first method step the waste is firstly comminuted coarsely in comminution installations and thereafter is further comminuted finely in a granulate installation into pieces with maximum dimensions of 1 to 3 mm.

5. The method according to any of Claims 1 to 4, characterized in that the core matter is pressed through a perforated disc for the production of the core strands, the amount of pressure applied and the dimensions of the disc holes being selected so that the core strands leaving the disc have a temperature of at least 100°C.

6. The method according to any of Claims 1 to 5, characterized in that the fourth, fifth and sixth method steps are carried out with the use of a drum holding the products which are to be treated, and driven rotatably.

7. The method according to any of Claims 1 to 6, characterized in that for the portions of the core matter to be produced in the second step, the following quantities in percentage by weight are selected, namely 40 to 80% refuse mixture, 30 to 40% water and 10 to 20% cement.

8. The method according to any of Claims 1 to 7, characterised in that for the portions of the core products to be produced in the fifth step, the following quantities in percentage by weight are selected, namely 75 to 85% core strand pieces, 2 to 4% water, 6 to 8% water glass and 7 to 9% cement.

9. The method according to any of Claims 1 to 8, characterized in that for the portions of the pellets to be produced in the sixth step, the following quantities in percentage by weight are selected, namely 60 to 70% core products, 5 to 7% water glass, 4 to 6% water, 4 to 6% sand, 17 to 21% cement and 0.5 to 1.5% cement hardener.

## Revendications

1. Procédé pour transformer des déchets en corps solides, dans lequel, lors d'une première étape, les déchets sont broyés et mélangés, et au cours d'étapes ultérieures, ce mélange de déchets est transformé, avec adjonction de liants et d'eau pour produire les corps solides, caractérisé
en ce que, lors d'une deuxième étape, le mélange de déchets est mélangé avec de l'eau et du ciment et est transformé en une masse de noyau pâteuse,
en ce que, lors d'une troisième étape, la masse de noyau, après un intervalle de temps prédéfini, est mise sous la forme de boudins de noyau par pressage, la température de la masse de noyau étant alors augmentée,
en ce que, lors d'une quatrième étape, les boudins de noyau, refroidis et durcis, sont concassés en morceaux de boudin de noyau,
en ce que, lors d'une cinquième étape, les morceaux de boudin de noyau sont enrobés, tout d'abord avec du verre soluble, et ensuite; une fois que le verre soluble a durci, avec un mélange de ciment et d'eau, et, une fois que le ciment a pris, forment des produits de noyau,
en ce que, lors d'une sixième étape, les produits de noyau sont d'abord enrobés par application de verre soluble et ensuite, une fois que le verre soluble a durci, sont enduits au moins une fois avec un mélange de sable, de ciment et d'eau, pour former des boulettes, et
en ce que, lors d'une dernière étape, les boulettes sont stockées pendant un intervalle de temps prédéfini pour durcir et forment alors les corps solides mentionnés.

2. Procédé selon la revendication 1, caractérisé en ce qu'il est ajouté au mélange utilisé au cours de la sixième étape un durcisseur de ciment.

3. Procédé selon l'une des revendications 1 et 2, caractérisé en ce que lors de la dernière étape, les boulettes sont stockées à l'abri de l'air.

4. Procédé selon l'une des revendications 1 à 3, caractérisé en ce que, lors de la première étape opératoire, les déchets sont tout d'abord broyés grossièrement, dans des installations de broyage, et sont ensuite broyés plus finement, dans une installation de granulation en fragments ayant des dimensions maximales comprises de 1 à 3 mm.

5. Procédé selon l'une des revendications 1 à 4, caractérisé en ce que la masse de noyau, pour la production des boudins de noyau, est pressée à travers un disque perforé, la pression de pressage et les dimensions des trous du disque étant choisies de telle sorte que les boudins de noyau qui sortent du disque présentent une température minimum de 100 °C.

6. Procédé selon l'une des revendications 1 à 5, caractérisé en ce que les quatrième, cinquième et sixième étapes opératoires sont réalisées en utilisant un tambour qui reçoit les produits à traiter et qui est entraîné en rotation.

7. Procédé selon l'une des revendications 1 à 6, caractérisé en ce qu'il est choisi, pour les proportions dans la masse de noyau à produire au cours de la deuxième étape, les ordres de grandeur de pourcentages en poids suivants, 40 à 80% de mélange de déchets, 30 à 40% d'eau et 10 à 20% de ciment.

8. Procédé selon l'une des revendications 1 à 7, caractérisé en ce qu'il est choisi, pour les proportions dans les produits de noyau à fabriquer au cours de la cinquième étape, les ordres de grandeur de pourcentages en poids suivants, 75 à 85 % de morceaux de boudins de noyau, 2 à 4 % d'eau, 6 à 8 % de verre soluble et 7 à 9 % de ciment.

9. Procédé selon l'une des revendications 1 à 8, caractérisé en ce qu'il est choisi, pour les proportions dans les boulettes à fabriquer au cours de la sixième étape, les ordres de grandeur de pourcentages en poids suivants, 60 à 70 % de produits de noyau, 5 à 7 % de verre soluble, 4 à 6 % d'eau, 4 à 6 % de sable, 17 à 21 % de ciment et 0,5 à 1,5 % de durcisseur de ciment.
